# EUROPEAN PATENT APPLICATION

(11) **EP 3 515 042 A1**
(43) Date of publication of application: **24.07.2019**
(21) Application number: 19152012.1
(22) Date of filing: 16.01.2019
(51) Int. Cl.: H04L 29/06, H04W 12/08, H02P 27/06

(54) **METHOD FOR CONTROLLING ACCESS TO ELECTRIC DRIVE APPARATUS**

(30) Priority: 22.01.2018 US 201815877001
(71) Applicant: ABB Schweiz AG, 5400 Baden (CH)
(72) Inventor: Hu, Zhongliang, 00380 Helsinki (FI); Tamminiemi, Petri, 00380 Helsinki (FI)
(74) Representative: Kolster Oy Ab

(57) **Abstract**

The invention relates to electric drive apparatuses used in different industries for different applications more particularly to a method for controlling access to an electric drive apparatus. The method comprises: starting in a first apparatus a access control tool application, said access control tool application arranged to have a communication with a software library component in said first apparatus, said software library component being configured to access one or more lists of accessible electric drive apparatuses, downloading by said first apparatus from a second apparatus one or more lists of accessible electric drive apparatuses, accessing said one or more lists of accessible electric drive apparatuses by said software library component in said first apparatus, and communicating a first list of accessible electric drive apparatuses by said software library component to said access control tool application in said first apparatus, said first list of accessible electric drive apparatuses being based on said one or more lists of accessible electric drive apparatuses.

## Description

### FIELD OF THE INVENTION

The invention relates to electric drive apparatuses used in different industries for different applications more particularly to a method for controlling access to an electric drive apparatus.

### BACKGROUND OF THE INVENTION

Electric drive apparatuses, i.e. electric drives are used in industry for different applications, such as for driving motors within the transportation industry, for driving different devices within the process and manufacturing industry as well as within the energy industry. There are applications commonly used for electric drives within the transportation industry for example in metro and railway traffic applications as well as in ship propulsion unit applications of the marine industry. Within the process and manufacturing industry, electric drives can be used for example in conveyer applications, in mixer applications or even in paper machine applications. Within the energy industry, electric drives can be used for example as electric drives for wind turbines of the wind power industry and as electric drives of the solar power industry.

Electric drives for electric motors may be divided into DC motor drives (DC, direct current) and AC drives (AC, alternating current). In a DC motor of a DC motor drive, a magnetic field is generated by the current through the field winding in the stator. This magnetic field is always maintained at right angles to the field generated by the armature winding. In this way, a DC motor's torque is generated, which torque can then be easily controlled in a DC motor drive by changing the armature current and keeping the magnetizing current constant. In a DC motor drive, also the DC motor speed can be controlled directly through armature current.

Within electric drives, the AC drives may further be divided into frequency-controlled AC drives, flux-vector-controlled AC drives and into AC drives utilising direct torque control (DTC, Direct Torque Control). In flux-vector-controlled AC drives and in direct torque control AC drives the torque of the three-phase motor can be controlled, whereas in frequency controlled AC drives the load dictates the torque level.

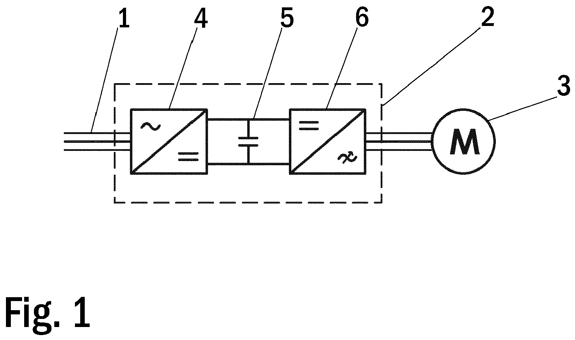

In the following, prior art will be described with reference to the accompanying Figure 1, which shows a block diagram of an electric drive according to prior art.

Figure 1 shows a block diagram of an electric drive according to prior art. The electric drive according to prior art comprises an input power feed 1, a frequency controller 2 and a load 3. The load 3 can be for example a motor 3. The frequency controller 2 typically comprises a rectifier unit 4, a fixed DC voltage intermediate circuit 5 and an inverter unit 6. The rectifier unit 4 of the frequency controller 2 converts the AC input power coming from the input power feed 1 into DC intermediate power. The rectifying in the frequency controller 2 can be realised for example with a 6-pulse diode bridge. The DC intermediate power coming from the rectifier unit 4 of the frequency controller 2 is stored in the fixed DC voltage intermediate circuit 5 acting as intermediate energy storage. The fixed DC voltage intermediate circuit 5 of the frequency controller 2 can be realised for example with capacitors. The inverter unit 6 of the frequency controller 2 converts the DC power of the fixed DC voltage intermediate circuit 5 into three channels of AC energy at the frequency suited by the motor 3 acting as a load 3. The inverter unit 6 of the frequency controller 2 can be realised for example with IGBT-type transistors (IGBT, Insulated-gate bipolar transistor).

Electric drives are typically used in very demanding applications. Especially, in most of the applications used, the demand for a most optimal and reliable operation and for operational efficiency constantly increasing. The operation of an electric drive apparatus depends upon the most optimal configuration and upon the most optimal electric drive parameter set up. When electric drives are used in an application to drive the load, e.g. a motor, optimally, energy will be saved considerably. On the other hand, when electric drives are not used correctly or are not having the most optimal configuration in an application, energy savings will not be that great.

In a typical electric drive application, there are several subsystems in the electric drive apparatus and in the application setting that may all contribute to reliable operation and to the overall operational efficiency of the electric drive application. For example in Figure 1, the functioning of the rectifier unit 4, the fixed DC voltage intermediate circuit 5 and the inverter unit 6 as subsystems 4 to 6 of the frequency controller 2 as well as the functioning of the input power feed 1 and the load 3 may all contribute to reliable operation and to the overall operational efficiency of the particular electric drive application. Each one of said several subsystems in the electric drive apparatus may have several drive parameters that may need to be changed or controlled in order to meet the most optimal setup in the changing conditions of the particular electric drive application. It is therefore necessary for the user to have a proper access to the electric drive order to control properly the electric drive apparatus and its subsystems.

The evolvement of communication technology, particularly wireless communication technology and end user devices, has enabled versatile communication possibilities and introduction of different services. There are smartphone applications that allow a user of the smartphone to receive service recommendations for a machine, store operational data on the machine over the network connection, and troubleshoot the machine.

Nowadays vendors of electric drives would like to develop vendor specific mobile smartphone applications as a solution for accessing and controlling the electric drive apparatus and its subsystems. The problem for such a mobile smartphone application solution is that it typically is not compatible with the electric drive manufacturers drive control and drive communication applications.

### BRIEF DESCRIPTION OF THE INVENTION

According to an aspect, there is provided the subject matter of the independent claims. Embodiments are defined in the dependent claims.

One or more examples of implementations are set forth in more detail in the accompanying drawings and the description below. Other features will be apparent from the description and drawings, and from the claims.

Some embodiments provide methods, apparatuses, a system and a computer program product for providing a solution for controlling access to an electric drive apparatus that would enable the development of vendor specific mobile smartphone applications and would enable a proper access to the electric drive order to control properly the electric drive apparatus and its subsystems.

### BRIEF DESCRIPTION OF THE DRAWINGS

In the following, the present invention will be described in greater detail by way of example and with reference to the accompanying drawings, in which:
Figure 1 shows a block diagram of an electric drive according to prior art.
Figure 2 illustrates a simplified architecture of an electric drive apparatus access control tool according to an exemplary embodiment of the present invention.
Figure 3 illustrates a simplified architecture of an arrangement for controlling access to an electric drive apparatus system and some apparatuses according to an exemplary embodiment of the present invention.
Figure 4 illustrates exemplary information exchange according to an exemplary embodiment of the present invention.
Figure 5 is a flow chart illustrating exemplary of a method for controlling access of an electric drive apparatus according to an exemplary embodiment of the present invention.
Figure 6 illustrates an apparatus according to some embodiments of the present invention in connection with the user apparatus/user device.
Figure 7 illustrates an apparatus according to some embodiments of the present invention in connection with the server.
Figure 8 illustrates a simplified architecture of an arrangement for controlling access to an electric drive apparatus system and some apparatuses according to another exemplary embodiment of the present invention.
Figure 9 illustrates another exemplary information exchange according to another exemplary embodiment of the present invention.
Figure 10 is a flow chart illustrating another exemplary of a method for controlling access of an electric drive apparatus according to another exemplary embodiment of the present invention.

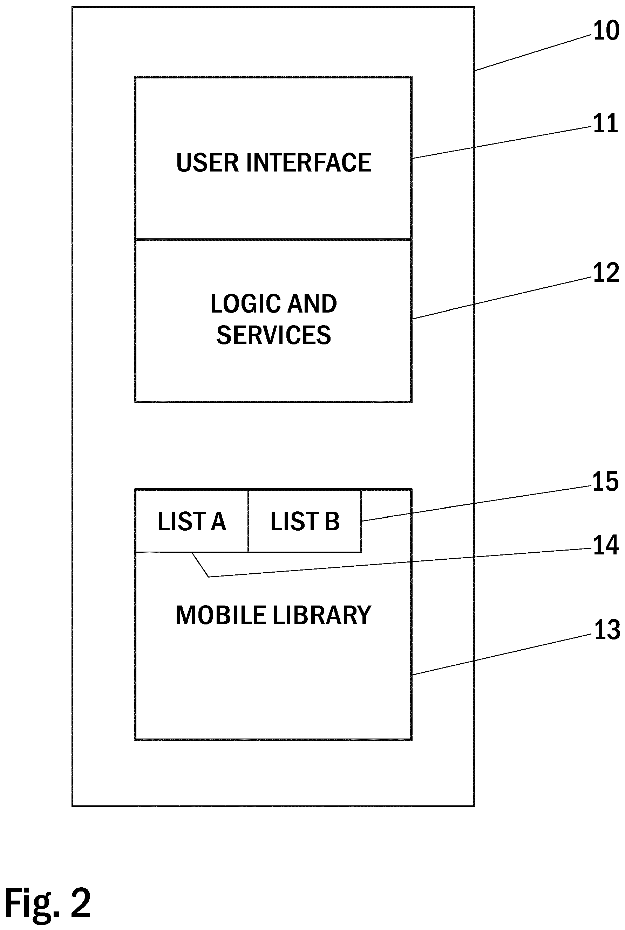

Prior art drawing of Figure 1 has been presented earlier. In the following, the invention will be described in greater detail by means of preferred embodiments with reference to the accompanying drawings of Figures 2 to 10. The foregoing aspects, features and advantages of the invention will be apparent from the drawings and the detailed description related thereto.

### DETAILED DESCRIPTION OF SOME EMBODIMENTS

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

Figure 2 illustrates a simplified architecture of an electric drive apparatus access control tool according to an exemplary embodiment of the present invention. Figure 2 is a simplified architecture only showing some elements, functional entities, which are logical units whose implementation may differ from what is shown. It is apparent to a person skilled in the art that the system may comprise any number of shown elements, other functions and structures that are not illustrated.

In the embodiment illustrated in Figure 2, the electric drive apparatus access control tool 10 is realized as a mobile application 10. In an alternative solution said the electric drive apparatus access control tool 10 may be realized as a computer program tool. The electric drive apparatus access control tool 10 comprises one or more software components 11, 12, e.g. a user interface 11, and a logic and services component 12. Said one or more software components 11, 12 may be configured as compatible with vendor specific customized software solutions and thus able to communicate with other vendor applications.

In the embodiment illustrated in Figure 2, the electric drive apparatus access control tool 10 comprises a mobile library software component 13 said mobile library software component 13 further comprising one or more lists 14, 15 of accessible electric drive apparatuses. Said one or more lists 14, 15 of accessible electric drive apparatuses comprises at least a list 14, 15 electric drive apparatuses that are accessible to the user.

Said mobile library software component 13 may e.g. be provided by the manufacturer of the electric drive apparatus to the vendor of said the electric drive apparatus. Said mobile library software component 13 may utilize electric drive unique identifiers (ID) and may provide the user with a ready-made mobile library with a list 14, 15 of electric drive apparatuses that the user can communicate to with the help of said mobile library software component 13. Said electric drive unique identifiers (ID) are unique identifiers stored inside each electric drive apparatus, which unique identifiers securely identify said electric drive apparatus. Said mobile library software component 13 may be compiled as a software component, which is not opened to user.

Each user may be given access to only one list 14, 15 of electric drive apparatuses in accordance with the access rights granted to said user while the other lists 14, 15 are not visible to said user. For example, a user A may be given access to List A 14, said List A 14 listing the electric drive apparatuses the user A is given an access to. Similarly, a user B may be given access to List B 15, said List B 15 listing the electric drive apparatuses the user A is given an access to.

Said mobile library software component 13 may have clear application programming interface (API), i.e. a clear set of subroutine definitions, protocols, and tools for building application software to the electric drive apparatus access control tool 10. This enables the vendor to develop and offer to the user a vendor specific mobile application built on top said mobile library software component 13 offered by the electric drive apparatus manufacturer. With the help of said mobile library software component 13 the user can communicate to any of the electric drive apparatuses mentioned a list 14, 15 of electric drive apparatuses with the help of said mobile library software component 13.

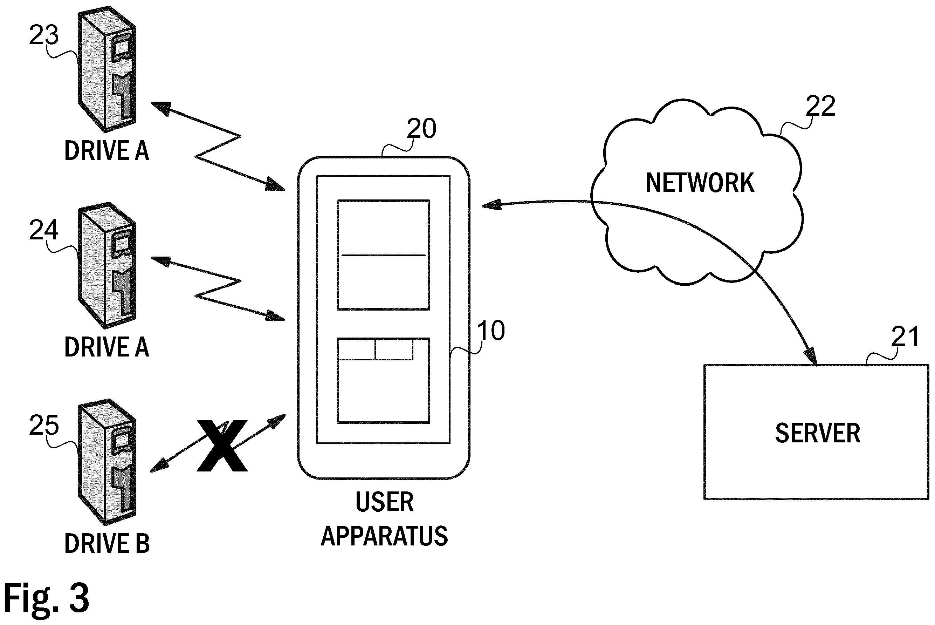

Figure 3 illustrates a simplified architecture of an arrangement for controlling access to an electric drive apparatus system and some apparatuses according to an exemplary embodiment of the present invention. Figure 3 is a simplified system architecture only showing some elements, functional entities, which are logical units whose implementation may differ from what is shown, and some equipment. It is apparent to a person skilled in the art that the system may comprise any number of shown elements, other equipment, other functions and structures that are not illustrated.

In the embodiment illustrated in Figure 3, the electric drive apparatus system comprises one or more electric drives 23-25 and one or more user apparatuses 20 (only one illustrated in Figure 3). Said one or more user apparatuses 20 are configured to communicate with said one or more electric drives 23-25. Said one or more user apparatuses 20 are also connected over one or more networks 22 (only one illustrated in Figure 3) to a server 21, e.g. an access control server 21, said server 21 configured to control access to the electric drives 23-25 in said electric drive apparatus system.

In the embodiment illustrated in Figure 3, the electric drive apparatus system comprises an electric drive apparatus access control tool 10 in a user apparatus 20 of or more user apparatuses 20. By utilizing said electric drive apparatus access control tool 10 a user can contact said server 21, i.e. an access control server 21, in order to acquire access rights to at least some of the electric drives 23-25 in said electric drive apparatus system. Thereafter, the user apparatus 20 may download one or more lists 14, 15 of electric drive apparatuses to said mobile library software component 13 of said electric drive apparatus access control tool 10 in a user apparatus 20.

In the presented exemplary embodiment, a user A may be given access to List A 14, said List A 14 listing the electric drive apparatuses the user A is given an access to. As shown in Figure 3, the user apparatus 20 of user A is given access to electric drive apparatuses 23-24 in accordance with the access rights granted to user A in said List A 14. Respectively, the user apparatus 20 of user A is not given access to an electric drive apparatus 25 in a list B 15. Said list B 15 and said electric drive apparatus 25 are not visible to said user A in said electric drive apparatus access control tool 10 of said the user apparatus 20 of user A.

In the embodiment illustrated in Figure 3, the electric drive apparatus system comprises one or more electric drives 23-25. It should be appreciated that an electric drive 23-25 depicts herein any device, machine, equipment, system and a process that whose operations and/or service and/or maintenance may be taken care remotely. Other examples of such equipment include frequency converters, AC/DC modules, DC/AC modules, programmable logic controllers, switches, motion controllers or motion drives, servo motors, soft starters, robots, cars, and heavy equipment, etc. It should be appreciated that in the above only some examples are listed.

The electric drive apparatus system according to the presented exemplary embodiment also comprises a user apparatus 20. The user apparatus 20 refers to a computing device (equipment), that may be a non-portable device or a portable device (mobile device), and it may also be referred to as a user terminal or user device. Portable computing devices (apparatuses) include wireless mobile communication devices operating with or without a subscriber identification module (SIM) in hardware or in software, including, but not limited to, the following types of devices: mobile phone, smart-phone, personal digital assistant (PDA), laptop and/or touch screen computer, tablet (tablet computer), multimedia device, wearable computer and other types of wearable devices, such as clothing and accessories incorporating computer and advanced electronic technologies. The user apparatus 20 is configured to support access control of electric drives in an electric drive apparatus system.

In the illustrated example, the user apparatus 20 has at least two communications interfaces, one to connect to the server 21 wirelessly over one or more networks 22 and one to connect to said one or more installed electric drives 23-25 over a local connection. The wireless connection to the service center may be provided by any mobile system, such as GSM, GPRS, LTE, 4G, 5G and beyond, or a combination of a mobile system and a fixed system, like Wi-Fi or Li-Fi providing access to internet and via internet to the service center. The local connection may be provided naturally over a mobile system but it may be provided by a direct connection, for example using Bluetooth, or by a local network, like Wi-Fi or Li-Fi. The number of reception and/or transmission antennas (not illustrated in Figure 3), or other communication interfaces, of said user apparatus 20 may naturally vary according to a current implementation, and the user apparatus type.

The one or more networks 22 (communications networks) may comprise one or more wireless networks, wherein a wireless network may be based on any mobile system, such as GSM, GPRS, LTE, 4G, 5G and beyond, or a wireless local area network, such as Wi-Fi, Li-Fi. Further, the one or more networks 22 may comprise one or more fixed networks and internet.

In the illustrated example the server 21, like a cloud server or a grid server, refers herein to a combination of a data storage and a data management system. The data storage may be any kind of conventional or future data repository, including distributed and centralized storing of data, a cloud-based storage in a cloud environment, managed by any suitable management system. The implementation of the data storage, the manner how data is stored, retrieved and updated are irrelevant to the invention, and therefore not described in detail here. The server 21 comprises a connection over the one or more networks 22 to said user apparatus 20.

In a typical of electric drive apparatus setup the control software of the electric drive is usually executed on the specific central processing unit (CPU) which control software is typically embedded very closely to drive hardware. Control software has multiple tasks to control the drive based on physical inputs and outputs.

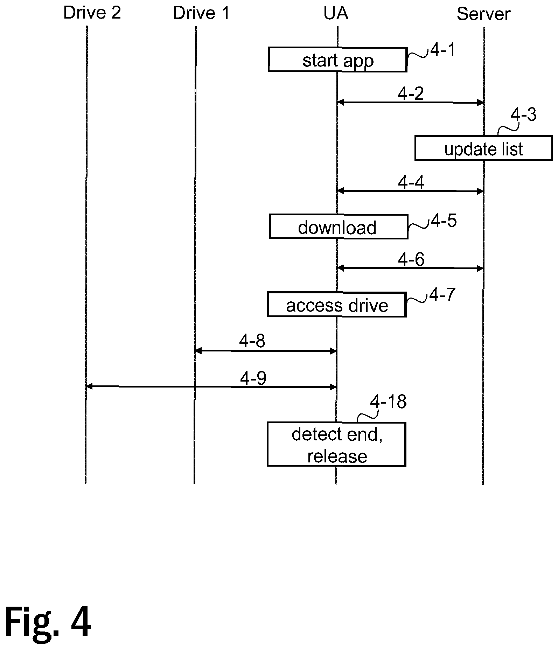

Figure 4 illustrates exemplary information exchange according to an exemplary embodiment of the present invention. Figure 4 illustrates information exchange in an exemplary situation in which an access control tool application is utilized for controlling access of an electric drive apparatus for example. Further, in the illustrated example it is assumed that alerting is triggered by sending a corresponding message and the alerting is continued as long as a message stopping alerting is received. However, it is a straightforward solution to implement the functionality disclosed below to a solution in which alerting is continued as long as alerting messages are received (and naturally sent) at a certain intervals. It should be appreciated that any known or future communication protocol and process to establish a session / connection may be used. Therefore, they are not described in detail herein.

Referring to Figure 4, when the user starts (point 4-1) an electric drive apparatus access control tool, e.g. a mobile application, in a user apparatus 20, UA, said user apparatus 20 establishes in point 4-2 a session to a server 21, e.g. an access control server 21, said server 21 configured to control access to the electric drives 23-25 in said electric drive apparatus system. Thereafter, in point 4-3, said server 21 updates a list 14, 15 of electric drive apparatuses for providing the user with said updated list 14, 15 of electric drive apparatuses that the user can communicate to with the help of a mobile library software component 13 of said electric drive apparatus access control tool 10. Furthermore, said updated list 14, 15 can be encapsulated into a separate encrypted entity, which can be opened e.g. by said mobile library software component 13 inside said electric drive apparatus access control tool 10.

After the updating 4-3 of said list 14, 15 of electric drive apparatuses is completed, the server 21 may inform 4-4 the user apparatus 20, e.g. by messaging, of said completed update. The user apparatus 20 detects the completion of the update and initiates a session 4-5 for downloading the said list 14, 15 of electric drive apparatuses from said server 21. Thus, the download session is established between said server 21 and the user apparatus 20; the messages 4-6 illustrate the download session establishment and information exchange and download between them.

As the user apparatus 20 has now received said list 14, 15 of electric drive apparatuses, said user apparatus 20 is now given access 4-7 to electric drive apparatuses in said list 14, 15 in accordance with the access rights granted to said user apparatus 20. The user, i.e. the user apparatus 20 may now establish a local connection to said electric drive apparatuses (Drive 1 and Drive 2; messages 4-8 and 4-9). With the help of the established connection the user may e.g. modify, control or change one or more of the drive parameters.

The drive parameters may include parameters including but being not limited to: electric drive model parameters, drive component version parameters, functional drive parameters (including drive motor rating parameters), physical drive parameters, drive test parameters (including drive motor ID run result parameters), user generated parameters, drive application generated parameters, drive accessory parameters, drive optional module/hardware parameters (including field bus module parameters, functional safety module parameters, braking chopper parameters, I/O module parameters). The drive parameters may also include drive application parameters. The other relevant process information may include load information, torque information, motor speed information, power consumption information, or any other relevant process information.

After the process requiring the access to electric drive apparatuses is completed, the electric drive apparatus access control tool application 10 in said user apparatus 20 may receive or detect in point 4-18 information indicating to end the session. In response to receiving, or detecting in point 4-18 information indicating to end the session, the electric drive apparatus access control tool application 10 in said user apparatus 20 releases in point 4-18 the session and the connection and resources reserved for them. Further, the electric drive apparatus access control tool application 10 may shut down, unless needed for other corresponding sessions.

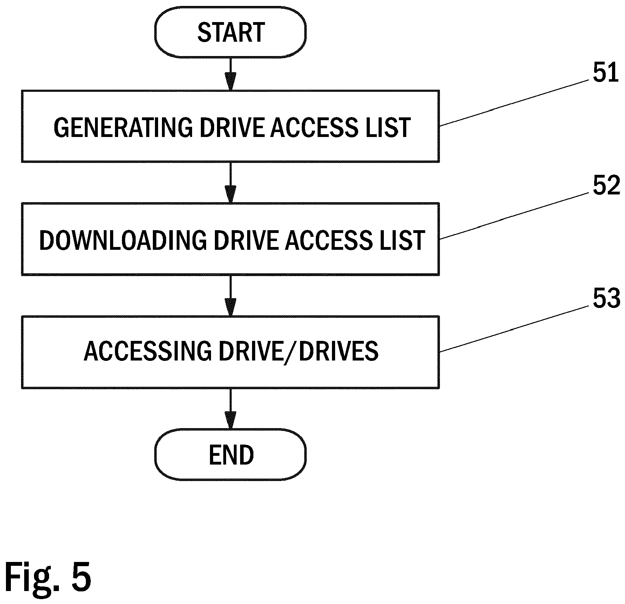

Figure 5 is a flow chart illustrating exemplary of a method for controlling access of an electric drive apparatus according to an exemplary embodiment of the present invention. Figure 5 illustrates an exemplary functionality of an electric drive apparatus access control tool application 10, e.g. a mobile application. In the example illustrated in Figure 5 it is assumed that the electric drive apparatus access control tool application 10 program is ended either in response to the user of the corresponding apparatus, e.g. user apparatus 20, providing such an input, or corresponding input is received from other apparatus.

Referring to Figure 5, an electric drive apparatus access control tool application, e.g. a mobile application, is started in a user apparatus 20, UA. Thereafter, in said method for controlling access of an electric drive apparatus according to the present embodiment, generation 51 of a drive access list 14, 15 is initiated, e.g. by said electric drive apparatus access control tool application 10 in said user apparatus 20.

Said drive access list 14, 15 is a list 14, 15 of electric drive apparatuses that the user can communicate to with the help of a mobile library software component 13 of said electric drive apparatus access control tool 10. Said drive access list 14, 15 is then generated 51 by a server 21. After the completion of the generated 51 drive access list 14, 15, said completion is detected by the user apparatus 20.

After detecting the generated 51 drive access list 14, 15 by the user apparatus 20, said drive access list 14, 15 is downloaded 52 from said server 21 to said user apparatus 20. After completing of the downloading 52 of drive access list 14, 15, said user apparatus 20 is now given access to electric drive apparatuses 23, 24 in said list 14, 15 in accordance with the access rights granted to said user apparatus 20.

After the downloading 52 of the drive access list 14, 15 the user, i.e. the user apparatus 20, may now access 53 said electric drive apparatuses 23, 24 by establishing a local connection to in accordance with the access rights granted to said user apparatus 20. With the help of the established connection the user may e.g. modify, control or change one or more of the drive parameters.

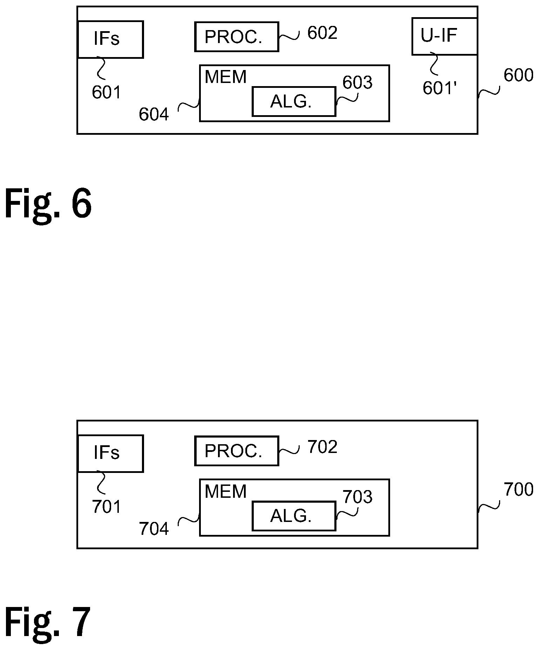

Figure 6 illustrates an apparatus according to some embodiments of the present invention in connection with the user apparatus/user device. Figure 6 illustrates an apparatus configured to carry out the functions described above in connection with the user apparatus/user device. Each apparatus 600 may comprise one or more communication control circuitry, such as at least one processor 602, and at least one memory 604, including one or more algorithms 603, such as a computer program code (software) wherein the at least one memory and the computer program code (software) are configured, with the at least one processor, to cause the apparatus to carry out any one of the exemplified functionalities of the user apparatus. The apparatus may further comprise different communication interfaces 601 and one or more user interfaces 601'.

Figure 7 illustrates an apparatus according to some embodiments of the present invention in connection with the server. Figure 7 illustrates an apparatus configured to carry out the functions described above in connection with the server. Each apparatus 700 may comprise one or more communication control circuitry, such as at least one processor 702, and at least one memory 704, including one or more algorithms 703, such as a computer program code (software) wherein the at least one memory and the computer program code (software) are configured, with the at least one processor, to cause the apparatus to carry out any one of the exemplified functionalities of the server. The memory 704 may comprise a database for storing different information, for example contact information on apparatuses, and information needed for maintenance. The apparatus may further comprise different communication interfaces 701.

The memory 604, 704 or part of it may be implemented using any suitable data storage technology, such as semiconductor based memory devices, flash memory, magnetic memory devices and systems, optical memory devices and systems, fixed memory and removable memory.

The one or more communication interfaces (TX/RX) 601, 701 may comprise hardware and/or software for realizing communication connectivity according to one or more communication protocols. The communication interface 601, 701 may comprise standard well-known components such as an amplifier, filter, frequency-converter, (de)modulator, and encoder/decoder circuitries and one or more antennas. The communication interfaces 601, 701 may comprise radio interface components and/or other wireless interface components providing the apparatus with wireless communication capability.

A user interface 601' may be any kind of a user interface, for example a screen, microphone, headset, head-mounted display, and/or one or more loudspeakers for interaction with the user.

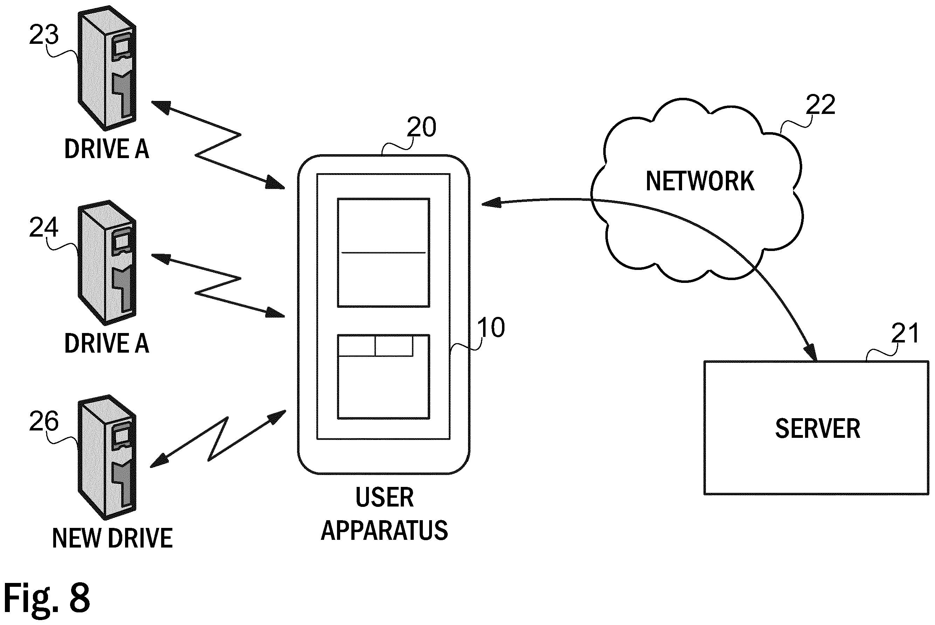

Figure 8 illustrates a simplified architecture of an arrangement for controlling access to an electric drive apparatus system and some apparatuses according to another exemplary embodiment of the present invention. Figure 8 is a simplified system architecture only showing some elements, functional entities, which are logical units whose implementation may differ from what is shown, and some equipment. It is apparent to a person skilled in the art that the system may comprise any number of shown elements, other equipment, other functions and structures that are not illustrated.

In another embodiment illustrated in Figure 8, the electric drive apparatus system comprises one or more electric drives 23-24, 26 and one or more user apparatuses 20 (only one illustrated in Figure 8). Said one or more user apparatuses 20 are configured to communicate with said one or more electric drives 23-24, 26. Said one or more user apparatuses 20 are also connected over one or more networks 22 (only one illustrated in Figure 8) to a server 21, e.g. an access control server 21, said server 21 configured to control access to the electric drives 23-24, 26 in said electric drive apparatus system. The electric drive apparatus system comprises an electric drive apparatus access control tool 10 in a user apparatus 20 of or more user apparatuses 20. By utilizing said electric drive apparatus access control tool 10 a user can contact said server 21, i.e. an access control server 21, in order to acquire access rights to at least some of the electric drives 23-24, 26 in said electric drive apparatus system. Thereafter, the user apparatus 20 may download from said server 21 one or more lists 14, 15 of electric drive apparatuses to said mobile library software component 13 of said electric drive apparatus access control tool 10 in a user apparatus 20.

In the presented another exemplary embodiment, a user A may be given access to List A 14, said List A 14 listing the electric drive apparatuses the user A is given an access to. As shown in Figure 8, the user apparatus 20 of user A is given access to electric drive apparatuses 23-24 in accordance with the access rights granted to user A in said List A 14.

In the presented another exemplary embodiment, the user apparatus 20 of user A may have a connection to said server 21 over one or more networks 22. Said server 21, i.e. said access control server 21, may update said mobile library software component 13 and subsequently said one or more lists 14, 15 of electric drive apparatuses in order to add or remove electric drives 23-24, 26 in said electric drive apparatus system. In the presented example, a new electric drive apparatus i.e. a new drive 26 is added to said previous List A thus generating a new updated list A. Said new updated list A is then downloaded from said server 21 by user apparatus 20. Said generated new updated list A can e.g. be encapsulated into a separate encrypted entity, which can be opened by library software component 13 inside said electric drive apparatus access control tool 10. As shown in Figure 8, the user apparatus 20 of user A is now given access to said new electric drive apparatus 26 in accordance with the access rights granted to user A in said new updated list A.

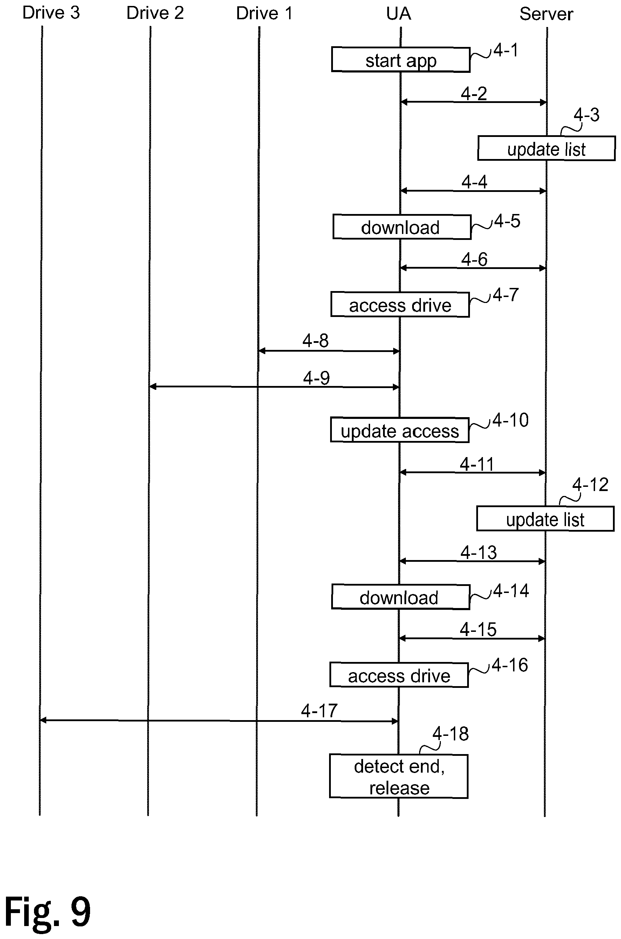

Figure 9 illustrates exemplary information exchange according to another exemplary embodiment of the present invention. Figure 9 illustrates information exchange in an exemplary situation in which an access control tool application is utilized for controlling access of an electric drive apparatus for example. Further, in the illustrated example it is assumed that alerting is triggered by sending a corresponding message and the alerting is continued as long as a message stopping alerting is received. However, it is a straightforward solution to implement the functionality disclosed below to a solution in which alerting is continued as long as alerting messages are received (and naturally sent) at a certain intervals. It should be appreciated that any known or future communication protocol and process to establish a session / connection may be used. Therefore, they are not described in detail herein.

Referring to Figure 9, when the user starts (point 4-1) an electric drive apparatus access control tool, e.g. a mobile application, in a user apparatus 20, UA, said user apparatus 20 establishes in point 4-2 a session to a server 21, e.g. an access control server 21, said server 21 configured to control access to the electric drives 23-25 in said electric drive apparatus system. Thereafter, in point 4-3, said server 21 updates a list 14, 15 of electric drive apparatuses for providing the user with said updated list 14, 15 of electric drive apparatuses that the user can communicate to with the help of a mobile library software component 13 of said electric drive apparatus access control tool 10.

After the updating 4-3 of said list 14, 15 of electric drive apparatuses is completed, the server 21 may inform 4-4 the user apparatus 20, e.g. by messaging, of said completed update. The user apparatus 20 detects the completion of the update and initiates a session 4-5 for downloading the said list 14, 15 of electric drive apparatuses from said server 21. Thus, the download session is established between said server 21 and the user apparatus 20; the messages 4-6 illustrate the download session establishment and information exchange and download between them.

As the user apparatus 20 has now received said list 14, 15 of electric drive apparatuses, said user apparatus 20 is now given access 4-7 to electric drive apparatuses in said list 14, 15 in accordance with the access rights granted to said user apparatus 20. The user, i.e. the user apparatus 20 may now establish a local connection to said electric drive apparatuses (Drive 1 and Drive 2; messages 4-8 and 4-9). With the help of the established connection the user may e.g. modify, control or change one or more of the drive parameters.

In the presented another exemplary embodiment, the user apparatus 20 may decide to update 4-10 access rights granted to said user apparatus 20. Consequently, said user apparatus 20 establishes in point 4-11 a session to said server 21 for updating said access rights.

Thereafter, in point 4-12, said server 21 updates a list 14, 15 of electric drive apparatuses for providing the user with said updated list 14, 15 of electric drive apparatuses that the user can communicate to with the help of a mobile library software component 13 of said electric drive apparatus access control tool 10.

The server 21 may update said one or more lists 14, 15 of electric drive apparatuses in order to add or remove electric drives 23-24, 26 in said electric drive apparatus system. In the presented example, a new electric drive apparatus i.e. a new drive (Drive 3) is added to said previous list 14, 15 thus generating a new updated list 14, 15.

After the updating 4-12 of said list 14, 15 of electric drive apparatuses is completed, the server 21 may inform 4-13 the user apparatus 20, e.g. by messaging, of said completed update. The user apparatus 20 detects the completion of the update and initiates a session 4-14 for downloading the said updated list 14, 15 of electric drive apparatuses from said server 21. Thus, the download session is established between said server 21 and the user apparatus 20; the messages 4-15 illustrate the download session establishment and information exchange and download between them.

As the user apparatus 20 has now received said updated list 14, 15 of electric drive apparatuses, said user apparatus 20 is now given access 4-16 to electric drive apparatuses in said updated list 14, 15 in accordance with the access rights granted to said user apparatus 20. The user, i.e. the user apparatus 20 may now establish a local connection to said added electric drive apparatuses (Drive 3; messages 4-17). With the help of the established connection the user may e.g. modify, control or change one or more of the drive parameters.

After the process requiring the access to electric drive apparatuses is completed, the electric drive apparatus access control tool application 10 in said user apparatus 20 may receive or detect in point 4-18 information indicating to end the session. In response to receiving, or detecting in point 4-18 information indicating to end the session, the electric drive apparatus access control tool application 10 in said user apparatus 20 releases in point 4-18 the session and the connection and resources reserved for them. Further, the electric drive apparatus access control tool application 10 may shut down, unless needed for other corresponding sessions.

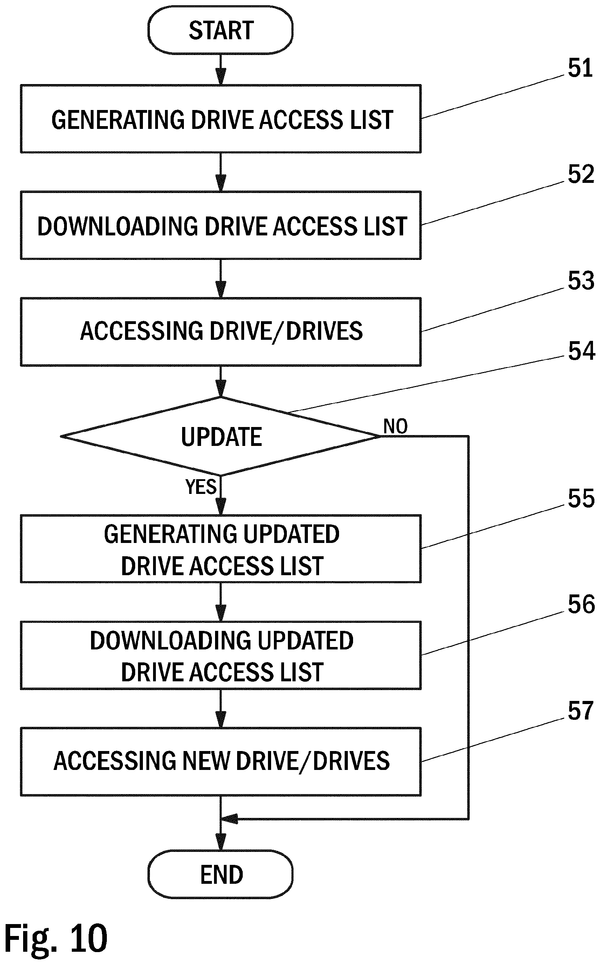

Figure 10 is a flow chart illustrating exemplary of a method for controlling access of an electric drive apparatus according to another exemplary embodiment of the present invention. Figure 10 illustrates an exemplary functionality of an electric drive apparatus access control tool application 10, e.g. a mobile application. In another exemplary embodiment illustrated in Figure 10 it is assumed that the electric drive apparatus access control tool application 10 program is ended either in response to the user of the corresponding apparatus, e.g. user apparatus 20, providing such an input, or corresponding input is received from other apparatus.

Referring to Figure 10, an electric drive apparatus access control tool application, e.g. a mobile application, is started in a user apparatus 20, UA. Thereafter, in said method for controlling access of an electric drive apparatus according to the present embodiment, generation 51 of a drive access list 14, 15 is initiated, e.g. by said electric drive apparatus access control tool application 10 in said user apparatus 20.

Said drive access list 14, 15 is a list 14, 15 of electric drive apparatuses that the user can communicate to with the help of a mobile library software component 13 of said electric drive apparatus access control tool 10. Said drive access list 14, 15 is then generated 51 by a server 21. After the completion of the generated 51 drive access list 14, 15, said completion is detected by the user apparatus 20.

After detecting the generated 51 drive access list 14, 15 by the user apparatus 20, said drive access list 14, 15 is downloaded 52 from said server 21 to said user apparatus 20. After completing of the downloading 52 of drive access list 14, 15, said user apparatus 20 is now given access to electric drive apparatuses 23, 24 in said list 14, 15 in accordance with the access rights granted to said user apparatus 20.

After the downloading 52 of the drive access list 14, 15 the user, i.e. the user apparatus 20, may now access 53 said electric drive apparatuses 23, 24 by establishing a local connection to in accordance with the access rights granted to said user apparatus 20. With the help of the established connection the user may e.g. modify, control or change one or more of the drive parameters.

In the presented another exemplary embodiment, the user may decide to update 54 the access rights granted to said user apparatus 20, e.g. by utilizing said electric drive apparatus access control tool application 10 in said user apparatus 20. Consequently, said user apparatus 20 initiates the generation 55 of an updated drive access list 14, 15. Said updated drive access list 14, 15 is an updated list 14, 15 of electric drive apparatuses that the user can communicate to with the help of a mobile library software component 13 of said electric drive apparatus access control tool 10.

The server 21 may update said one or more lists 14, 15 of electric drive apparatuses in order to add or remove electric drives 23-24, 26 in said electric drive apparatus system. In the presented example, a new electric drive apparatus i.e. a new drive 26 is added to said previous list 14, 15 thus generating 55 a new updated list 14, 15. Said updated drive access list 14, 15 is then generated 55 by said server 21. After the completion of the generated 55 updated drive access list 14, 15, said completion is detected by the user apparatus 20.

After detecting the generated 55 updated drive access list 14, 15 by the user apparatus 20, said updated drive access list 14, 15 is downloaded 56 from said server 21 to said user apparatus 20. After completing of the downloading 56 of the updated drive access list 14, 15, said user apparatus 20 is now given access to electric drive apparatuses 23, 24, 26 in said updated list 14, 15 this including access to said added electric drive apparatus 26 in said updated list 14, 15 in accordance with the access rights granted to said user apparatus 20.

After the downloading 56 of the drive access list 14, 15 the user, i.e. the user apparatus 20, may now access 57 said electric drive apparatuses 23, 24, 26, this including said added electric drive apparatus 26. Thus, the user may access 57 said electric drive apparatuses 23, 24, 26 by establishing a local connection to in accordance with the access rights granted to said user apparatus 20. With the help of the established connection the user may e.g. modify, control or change one or more of the drive parameters.

The steps, points, related functions, and information exchanges described above by means of Figures 4 to 5 and 9 to 10 are in no absolute chronological order, and some of them may be performed simultaneously or in an order differing from the given one. Other functions can also be executed between them or within them, and other information may be sent. Some of the steps or points or part of the steps or points or one or more pieces of information can also be left out or replaced by a corresponding step, point or part of the step, point or one or more pieces of information. For example, it should be appreciated that the user input received via a user interface and/or as received information may relate only one, two or three of the examples mentioned above with Figure 5 or with Figure 10, and/or further information exchange not expressly mentioned may be involved, using the above described principles.

The above steps, points, related functions, and information exchanges described above by means of Figures 4 to 5 and 9 to 10 do not necessarily happen at the same time and the whole process described above by means of Figures 4 to 5 and 9 to 10 does not have to be done by same persons to a single target electrical drive.

The techniques and methods described herein may be implemented by various means so that a user apparatus/user device and/or a server/ database server configured to support configuration of an electric drive apparatus, based on at least partly on what is disclosed above with any of Figures 4 to 5 and 9 to 10, including implementing one or more functions/operations of a corresponding user apparatus and/or a server described above with an embodiment/example, for example by means of Figures 4 to 5 and 9 to 10, comprises not only prior art means, but also means for implementing the one or more functions/operations of a corresponding functionality described with an embodiment, for example by means of Figures 4 to 5 and 9 to 10, and it or they may comprise separate means for each separate function/operation, or means may be configured to perform two or more functions/operations. For example, one or more of the means described above may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, logic gates, other electronic units designed to perform the functions described herein by means of Figures 4 to 5 and 9 to 10, or a combination thereof. For firmware or software, the implementation can be carried out through modules of at least one chipset (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

With the help of the present invention, a user, e.g. a customer or a service engineer, can manage the drives easily with own user apparatus 20 and a electric drive apparatus access control tool 10. The mobile library software component 13 according to the present invention provides the user with clear and updated information on the accessible electric drive apparatuses 23, 24, 26.

Furthermore, with the help of a mobile library software component 13 according to the present invention offered by the electric drive apparatus manufacturer, the vendor of electric drive apparatuses can easily develop and offer to the user a vendor specific mobile application, such as e.g. an electric drive apparatus access control tool 10, built on top said mobile library software component 13.

The present invention provides additional security in accessing accessible the electric drive apparatuses. With the help of the present invention, the user can securely access the accessible electric drive apparatuses 23, 24, 26 in accordance with the access rights granted to said user. The mobile library software component 13 according to the present invention securely provides, e.g. by using electric drive unique identifiers (ID), the user with a ready-made mobile library with a list 14, 15 of electric drive apparatuses that the user can securely access.

As used in this application, the term "circuitry" refers to all of the following: (a) hardware-only circuit implementations, such as implementations in only analog and/or digital circuitry, and (b) combinations of circuits and soft-ware (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of "circuitry" applies to all uses of this term in this application. As a further example, as used in this application, the term "circuitry"' would also cover an implementation of merely a processor (or multiple processors) or a portion of a processor and its (or their) accompanying software and/or firmware. The term "circuitry" would also cover, for example and if applicable to the particular element, a baseband integrated circuit or applications processor integrated circuit for a user apparatus or a similar integrated circuit in a service desk, or in a server.

In an embodiment, the at least one processor, the memory, and the computer program code form processing means or comprises one or more computer program code portions for carrying out one or more operations according to any one of the embodiments of Figures 4 to 5 and 9 to 10 or operations thereof.

Embodiments as described may also be carried out in the form of a computer process defined by a computer program or portions thereof. Embodiments of the methods described in connection with Figures 4 to 5 and 9 to 10 may be carried out by executing at least one portion of a computer program comprising corresponding instructions. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electric carrier signal, telecommunications signal, and software distribution package, for example. The computer program medium may be a non-transitory medium. Coding of software for carrying out the embodiments as shown and described is well within the scope of a person of ordinary skill in the art.

Even though the invention has been described above with reference to examples according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

It will be obvious to a person skilled in the art that, as technology advances, the inventive concept can be implemented in various ways. The invention and its embodiments are not limited to the examples described above but may vary within the scope of the claims.

## Claims

1. A method comprising:
- starting in a first apparatus a access control tool application, said access control tool application arranged to have a communication with a software library component in said first apparatus, said software library component being configured to access one or more lists of accessible electric drive apparatuses;
- downloading by said first apparatus from a second apparatus one or more lists of accessible electric drive apparatuses;
- accessing said one or more lists of accessible electric drive apparatuses by said software library component in said first apparatus; and
- communicating a first list of accessible electric drive apparatuses by said software library component to said access control tool application in said first apparatus, said first list of accessible electric drive apparatuses being based on said one or more lists of accessible electric drive apparatuses.

2. The method of claim 1, further comprising:
- downloading by said first apparatus from said second apparatus one or more updated lists of accessible electric drive apparatuses;
- accessing said one or more updated lists of accessible electric drive apparatuses by said software library component in said first apparatus; and
- communicating a second list of accessible electric drive apparatuses by said software library component to said access control tool application in said first apparatus, said second list of accessible electric drive apparatuses being based on said one or more updated lists of accessible electric drive apparatuses.

3. A method comprising:
- updating in a second apparatus, in response to a contact from a first apparatus, one or more lists of accessible electric drive apparatuses, said second apparatus being configured to control access to electric drive apparatuses; and
- forwarding by said second apparatus said one or more lists of accessible electric drive apparatuses to said first apparatus, said one or more lists of accessible electric drive apparatuses being arranged accessible to a software library component in said first apparatus.

4. The method of claim 3, further comprising:
- updating in a second apparatus, one or more updated lists of accessible electric drive apparatuses; and
- forwarding by said second apparatus said one or more updated lists of accessible electric drive apparatuses to said first apparatus, said one or more updated lists of accessible electric drive apparatuses being arranged accessible to a software library component in said first apparatus.

5. A computer program product comprising a non-transitory computer-readable storage medium having stored thereon computer program instructions which, when run by at least one processor, cause the at least one processor to:
- download, when a access control tool application is started in a first apparatus comprising the processor, from a second apparatus one or more lists of accessible electric drive apparatuses, wherein said access control tool application is arranged to have a communication with a software library component in said first apparatus, said software library component being configured to access one or more lists of accessible electric drive apparatuses;
- cause accessing said one or more lists of accessible electric drive apparatuses by said software library component in said first apparatus; and
- cause communicating a first list of accessible electric drive apparatuses by said software library component to said access control tool application in said first apparatus, said first list of accessible electric drive apparatuses being based on said one or more lists of accessible electric drive apparatuses.

6. The computer program product of claim 5, further comprising a non-transitory computer-readable storage medium having stored thereon computer program instructions which, when run by at least one processor, cause the at least one processor to:
- download from said second apparatus one or more updated lists of accessible electric drive apparatuses;
- cause accessing said one or more updated lists of accessible electric drive apparatuses by said software library component in said first apparatus; and
- cause communicating a second list of accessible electric drive apparatuses by said software library component to said access control tool application in said first apparatus, said second list of accessible electric drive apparatuses being based on said one or more updated lists of accessible electric drive apparatuses.

7. A computer program product comprising a non-transitory computer-readable storage medium having stored thereon computer program instructions which, when run by at least one processor, cause the at least one processor to:
- cause updating, in a second apparatus comprising the processor, in response to a contact from a first apparatus, one or more lists of accessible electric drive apparatuses, said second apparatus being configured to control access to electric drive apparatuses; and
- cause forwarding by said second apparatus said one or more lists of accessible electric drive apparatuses to said first apparatus, said one or more lists of accessible electric drive apparatuses being arranged accessible to a software library component in said first apparatus.

8. The computer program product of claim 7, further comprising a non-transitory computer-readable storage medium having stored thereon computer program instructions which, when run by at least one processor, cause the at least one processor to:
- cause updating in a second apparatus, one or more updated lists of accessible electric drive apparatuses; and
- cause forwarding by said second apparatus said one or more updated lists of accessible electric drive apparatuses to said first apparatus, said one or more updated lists of accessible electric drive apparatuses being arranged accessible to a software library component in said first apparatus.

9. A user apparatus comprising at least one processor, and at least one memory including computer program code, wherein the at least one memory and the computer program code are configured to, with the at least one processor, cause the user apparatus at least to:
- start in the user apparatus a access control tool application, said access control tool application arranged to have a communication with a software library component in said user apparatus, said software library component being configured to access one or more lists of accessible electric drive apparatuses;
- download from a second apparatus one or more lists of accessible electric drive apparatuses;
- access said one or more lists of accessible electric drive apparatuses by said software library component in said user apparatus; and
- communicate a first list of accessible electric drive apparatuses by said software library component to said access control tool application in said user apparatus, said first list of accessible electric drive apparatuses being based on said one or more lists of accessible electric drive apparatuses.

10. The user apparatus of claim 9, wherein the at least one memory and the computer program code are configured to, with the at least one processor, further cause the user apparatus at least to:
- download from said second apparatus one or more updated lists of accessible electric drive apparatuses;
- access said one or more updated lists of accessible electric drive apparatuses by said software library component in said user apparatus; and
- communicate a second list of accessible electric drive apparatuses by said software library component to said access control tool application in said user apparatus, said second list of accessible electric drive apparatuses being based on said one or more updated lists of accessible electric drive apparatuses.

11. A server apparatus, the server apparatus comprising at least one processor, and at least one memory including computer program code, wherein the at least one memory and the computer program code are configured to, with the at least one processor, cause the server apparatus at least to:
- update in the server apparatus, in response to a contact from a first apparatus, one or more lists of accessible electric drive apparatuses, said server apparatus being configured to control access to electric drive apparatuses; and
- forward said one or more lists of accessible electric drive apparatuses to said first apparatus, said one or more lists of accessible electric drive apparatuses being arranged accessible to a software library component in said first apparatus.

12. The server apparatus of claim 11, wherein the at least one memory and the computer program code are configured to, with the at least one processor, further cause the server apparatus at least to:
- update in the server apparatus, one or more updated lists of accessible electric drive apparatuses; and
- forward said one or more updated lists of accessible electric drive apparatuses to said first apparatus, said one or more updated lists of accessible electric drive apparatuses being arranged accessible to a software library component in said first apparatus.

13. A system comprising at least:
- one or more sites, a site comprising with an at least one electric drive apparatus in a site that comprise one or more interfaces to enable local connections;
- at least one server apparatus being configured to update in the server apparatus, in response to a contact from said user apparatus, one or more lists of accessible electric drive apparatuses, said server apparatus being configured to control access to electric drive apparatuses, and forward said one or more lists of accessible electric drive apparatuses to said user apparatus, said one or more lists of accessible electric drive apparatuses being arranged accessible to a software library component in said user apparatus; and
- one or more user apparatuses, a user apparatus being configured to start in the user apparatus a access control tool application, said access control tool application arranged to have a communication with a software library component in said user apparatus, said software library component being configured to access one or more lists of accessible electric drive apparatuses; to download from said server apparatus one or more lists of accessible electric drive apparatuses, to access said one or more lists of accessible electric drive apparatuses by said software library component in said user apparatus, and to communicate a first list of accessible electric drive apparatuses by said software library component to said access control tool application in said user apparatus, said first list of accessible electric drive apparatuses being based on said one or more lists of accessible electric drive apparatuses.

14. The system of claim 13, wherein:
- the at least one server apparatus is further configured to update in the server apparatus, one or more updated lists of accessible electric drive apparatuses, and to forward said one or more updated lists of accessible electric drive apparatuses to said user apparatus, said one or more updated lists of accessible electric drive apparatuses being arranged accessible to a software library component in said user apparatus; and
- the user apparatus is further configured to download from said server apparatus one or more updated lists of accessible electric drive apparatuses, to access said one or more updated lists of accessible electric drive apparatuses by said software library component in said user apparatus; and to communicate a second list of accessible electric drive apparatuses by said software library component to said access control tool application in said user apparatus, said second list of accessible electric drive apparatuses being based on said one or more updated lists of accessible electric drive apparatuses.
